# EUROPÄISCHE PATENTSCHRIFT

(11) **EP 1 379 477 B1**
(45) Veröffentlichungstag und Bekanntmachung des Hinweises auf die Patenterteilung: **15.10.2008**
(21) Anmeldenummer: 02727564.3
(22) Anmeldetag: 17.04.2002
(51) Int. Cl.: C03C 17/25, C03C 23/00, B44C 1/04, B44C 1/14

(54) **VERFAHREN ZUR HERSTELLUNG FARBIGER STRUKTUREN EINES GLASES**
METHOD FOR THE PRODUCTION OF COLORED STRUCTURES OF A GLASS
PROCEDE DE PRODUCTION DE STRUCTURES COLOREES SUR VERRE

(30) Priorität: 18.04.2001 DE 10118876
(43) Veröffentlichungstag der Anmeldung: 14.01.2004
(73) Patentinhaber: boraident GmbH, 06118 Halle/Saale (DE)
(72) Erfinder: CZARNETZKI, Walter, 23847 Meddewade (DE)
(74) Vertreter: COHAUSZ DAWIDOWICZ HANNIG & SOZIEN
(86) Internationale Anmeldenummer: PCT/EP2002/004257
(87) Internationale Veröffentlichungsnummer: WO 2002/083589

(56) Entgegenhaltungen:
- EP-A- 0 531 584
- WO-A-95/25639
- DD-A- 215 776
- DE-A- 19 926 878
- US-A- 5 030 551
- US-A- 5 194 079

## Beschreibung

Die Erfindung bezieht sich jeweils auf die Herstellung farbiger Strukturen eines Glases, insbesondere zum Beschriften eines Glases nach dem Patentanspruch 1.

Es ist bekannt, farbige Strukturen, z.B. Beschriftungen an einem Glas zu bewerkstelligen, indem eine metallsalzhaltige Paste durch Masken-, Sieb- oder Tampondruck in der gewünschten Struktur auf die Glasoberfläche aufgebracht und über eine anschließende Wärmebehandlung Metallpartikel in der oberflächennahen Glasschicht erzeugt werden. Zuvor sind Metallionen in die oberflächennahe Glasschicht eingebracht worden (Dotierung); sie werden durch im Glas enthaltene Reduktionsmittel und unter Temperatureinfluss zu Atomen reduziert, die sich zu Metallpartikeln zusammenlagern (Koagulation). In der DE 40 13 300 wird eine praktische Anwendung dieses Verfahrens zum Beschriften einer Windschutzscheibe für Automobile offenbart, bei dem im Siebdruckverfahren eine Licht- und Wärmestrahlung dämpfendes Filterband aufgedruckt wird. Das bekannte Verfahren benutzt die Technologie beim Färben von Gläsern, bei der einer Glasschmelze Zusätze in Form von Metallsalzen zugegeben wird. Bei einer anschließenden Temperung erfolgt über Ionenaustauschprozesse nahe der Glasoberfläche durch Reduktionsmittel im Glas die Bildung von Atomen, welche sich zu Metallpartikeln zusammenlagern und dadurch eine Färbung herbeiführen. Besonders geeignet sind Gold-, Kupfer- und Silbersalze bzw. deren Atome zur Färbung des Glases im sichtbaren Spektalbereich. Nachteil des bekannten Beschriftungsverfahrens ist der relativ hohe Arbeitsaufwand durch mehrere Produktionsschritte und die Notwendigkeit der Herstellung entsprechender Masken für jede gewünschte Struktur. Zudem sind die auf diese Weise herstellbaren farbigen Strukturen durch die Masken und den Diffusionsprozess in ihrer kleinstmöglichen Größe und auch in der Präzision begrenzt, sodass sich auf diese Weise keine farbigen Strukturen mit Abmessungen im Bereich von µm herstellen lassen.

Es ist ferner bekannt, mit Hilfe von Laserstrahlen farbige Strukturen und Gravuren mit Abmessungen bis hinein in den µm-Bereich auf Oberflächen von Glas, Kunststoffen, Metallen, Keramik usw. herzustellen. Diese Verfahren beruhen auf einer lokalen Zerstörung der Oberflächenstruktur durch Materialabtrag-, Verdampfung-, Aufschmelzung oder Einbrennen von Fremdmaterial. Lokale Zerstörungen der Oberflächenstruktur führen zu einer Verringerung der mechanischen Beanspruchbarkeit von Glas, die bei vielen Anwendungen nicht akzeptiert werden kann. Zudem befinden sich die Strukturen unmittelbar an der Oberfläche des Glases und sind somit mechanisch und chemisch leicht angreifbar.

Aus US 4,769,310 ist ein Verfahren zur Erzeugung von Markierungen in Keramiken oder Gläsern bekannt geworden, die strahlungsempfindliche anorganische Verbindungen enthalten. Die mit diesem Verfahren erzeugten Markierungen befinden sich ebenfalls in oberflächennahen Schichten.

Aus US 5,206,496 ist ein Verfahren zur Erzeugung nicht nur flächiger, sondern auch räumlicher Strukturen in Volumen von beliebig geformten transparenten Körpern offenbart. Auf einen Körper aus Glas oder Kunststoff wird ein fokussierter Strahl mit hoher Energiedichte gelenkt, für den das Material transparent ist. Im Fokus, der im Inneren des Körpers liegt, bewirkt der Strahl aufgrund der nur bei sehr hohen Energiedichten wirksam werdenden nicht linearen optischen Eigenschaften eine Ionisierung des Materials und letztlich eine lokal begrenzte Schädigung des Materials, ohne die Bereiche außerhalb des Fokus und die Oberfläche des Körper wahrnehmbar zu verändern. Diese Schädigungen führten zu eine im Vergleich zum bearbeitenden Material erhöhten Extinktion in den bearbeiteten Bereichen. Die erhöhte Extinktion wird durch Mikrorisse hervorgerufen, die einfallendes Licht streuen und so den Ort, an dem sich der Fokus befunden hat, sichtbar machen. Durch eine Relativbewegung zwischen dem Körper und dem Fokus können auf diese Weise vorbestimmte Strukturen erzeugt werden.

Aus DE 198 41 547 ist bekannt geworden, verschiedenartige farbige Strukturen mit ein, zwei oder drei Dimensionen im Inneren von Gläsern zu erzeugen, ohne die mechanischen Eigenschaften des Glases zu beeinträchtigen. Dies wird dadurch erreicht, dass in kleinen Volumenelementen an beliebiger Stelle im Glas, das Ionen von Metallen enthält, die in Form submikroskopischer Partikel das Glas färben, solche Partikel ausgeschieden werden und durch Aneinanderreihung solcherart gefärbter Volumenelemente die gewünschte Farbstruktur aufgebaut wird. Durch lokal begrenzte Erwärmung der Volumenelemente kann die Partikelbildung auf diese beschränkt werden. Das bekannte Verfahren beruht daher auf der Erzeugung von Markierungen, Strukturen oder Beschriftungen von Gläsern mit Hilfe eines Laserstrahls. Voraussetzung ist jedoch, dass die Gläser zuvor entsprechend dotiert sind, d.h. Ionen von Metallen enthalten. Wie eingangs erwähnt, kann dies dadurch erreicht werden, dass entweder entsprechende Zusätze in die Glasschmelze gegeben werden oder eine metallsalzhaltige Paste auf das Glas aufgebracht wird, wonach bei einer anschließenden Temperung Metallionen über Ionenaustauschprozesse und Diffusion in eine grenznahe Schicht gelangen.

Aus DD 215 776 A1 ist ein Verfahren zur Herstellung farbiger Bilder auf Glas bekannt. Bei dem Verfahren wird Diffusionsfarbe durch Laserstrahlung entsprechend den vorgesehenen Konturen des Bildes gleichzeitig mit der Glasoberfläche erhitzt. Auf der erhitzten Glasoberfläche gelangt die Diffusionsfarbe durch Konvektion und Diffusion in das Glas, wodurch eine dauerhafte säure- und laugenfeste Farbspur entsteht. Nachteilig an dem bekannten Verfahren ist, daß die Glasoberfläche aufgeschmolzen wird und so die mechanische Stabilität beeinträchtigt wird.

Aus WO 95/25639 ist ein Verfahren zur Kennzeichnung von transparentem Material bekannt geworden, bei dem ein Laserstrahl durch das zu kennzeichnende Material hindurch auf einen Träger gerichtet wird. Der Träger erwärmt sich, schmilzt und verdampft. Der Träger hat dabei einen Abstand von dem transparenten Material und kann beispielsweise aus Siebdruckfarbe oder einem Metall bestehen. Die verdampfen Partikel des Trägers schlagen sich auf der Oberfläche des transparenten Materials nieder.

In EP 0 531 584 A1 ist ein Verfahren zur Beschriftung oder Dekoration von der Oberfläche eines transparenten Substrats beschrieben, bei dem eine Hilfsschicht, die zwei Arten Ionen von Übergangselementen mit unterschiedlicher Wertigkeit oder Ordnungszahl enthält, auf eine Oberfläche aufgetragen und mittels Laserstrahlung erhitzt wird. Dadurch kommt es zu einer Wechselwirkung der Hilfsschicht mit der Glasoberfläche, die das Glas färbt. Dabei wird in Kauf genommen, daß die Oberfläche des Substrats beschädigt wird. Die Oberfläche ähnelt nach der Beschriftung beispielsweise einer geschliffenen oder chemisch mattierten oder sandgestrahlten Oberfläche.

Der Erfindung liegt die Aufgabe zugrunde, ein Verfahren zur Herstellung farbiger Strukturen eines Glases, insbesondere zum Beschriften des Glases, anzugeben, bei dem mit Hilfe eines Laserstrahls im grenzschichtnahen Bereich durch lokal begrenzte Erwärmung submikroskopische Partikel erzeugt werden, die durch Aneinanderreihung gefärbter Volumenelemente zu einer gewünschten Struktur aufgebaut werden, ohne daß hierfür zuvor Metallionen in das Glas eingebracht werden müssen und ohne daß die Oberfläche des Glases selbst Beeinträchtigung erfährt.

Diese Aufgabe wird durch die Merkmale des Patentanspruchs 1 gelöst.

Bei dem erfindungsgemäßen Verfahren erfolgt die lokale Erwärmung des undotierten Glases durch eine Lösung oder ein Gel eines Metallsalzes hindurch, welche(s) den Laserstrahl gut transmittiert und in unmittelbaren Kontakt mit einer Oberfläche des Glases gebracht wird. Hierbei wird von der Erkenntnis ausgegangen, dass mit Hilfe des Laserstrahls zum einen das Glas lokal mit Metallionen dotiert werden kann, und zwar nur dort, wo sie benötigt werden und zum anderen im grenznahen Bereich des Glases durch Ionenaustauschprozesse Atome reduziert werden, die die mehrfach erwähnten Metallpartikel bilden. Mithin erfolgt beim erfindungsgemäßen Verfahren die Dotierung und Beschriftung oder Markierung oder Strukturbildung in einem einzigen Schritt, was einen sehr geringen Aufwand erfordert, zumal eine großvolumige Dotierung des Glases, wie sie bei herkömmlichen Verfahren angewendet wird, in Fortfall kommt. Die Temperatur der Erwärmung in dem zu färbenden Bereich ist bei dem erfindungsgemäßen Verfahren niedriger als eine zum Aufschmelzen der Oberfläche erforderliche Temperatur. Eine Schwächung der Stabilität des Glases wird auf diese Weise vermieden, so daß das Verfahren besonders zur

Kennzeichnung von Windschutzscheiben und anderen Scheiben an Kraftfahrzeugen geeignet ist. Die Kennzeichnung der Scheiben kann beispielsweise zum Zwecke der Diebstahlsicherung mit einer eindeutigen Nummer erfolgen, beispielsweise der Fahrgestellnummer.

Eine alternative Lösung der erfindungsgemäßen Aufgabe ist in Anspruch 9 angegeben. Hiernach erfolgt die lokale Erwärmung des undotierten Glases durch ein Substrat hindurch, das ein Metallsalz enthält, den Laserstrahl gut transmittiert und in unmittelbarem Kontakt mit einer Oberfläche des Glases gebracht wird. Der hierbei sich abspielende Prozess ist der gleiche wie oben beschrieben.

Nach einer Ausgestaltung der Erfindung bedeckt die Lösung oder das Gel die Glasoberfläche in einer dünnen Schicht oder einem Film. Der Film oder die Schicht kann auf das Glas lokal dort aufgesprüht werden, wo eine Beschriftung, Markierung oder dergleichen erwünscht ist. Alternativ kann das Gel oder die Lösung auf das Glas aufgestrichen werden. Es ist jedoch auch möglich, das Glas in ein Lösungsbad einzutauchen. Wesentlich ist aber, dass die Lösung oder das Gel ausreichend transparent ist, damit eine ausreichende Energie in das Glas eingetragen werden kann, um die Partikelbildung herbeizuführen.

Nach einer weiteren Ausgestaltung der Erfindung ist auch denkbar, die Lösung oder das Gel als Schicht auf einer Folie aufzubringen, die anschließend mit der Glasfläche in Kontakt gebracht wird. Die Lösung oder das Gel kann einen einheitlichen Gegenstand mit der Folie bilden, die z.B. aus Schutzgründen mit einer Schutzschicht bedeckt ist, die vor dem Inkontaktbringen der Folie mit der Glasoberfläche entfernt wird. Es versteht sich, dass auch die Folie ausreichend transmittierende Eigenschaften für den Laserstrahl aufweisen muss. Dies gilt naturgemäß auch für den Fall, dass das Metallsalz in eine Folie eingelagert ist, wie dies im Anspruch 9 vorgeschlagen wird.

Als Metallsalze kommen Silbernitrat, Goldnitrat, Kupfernitrat oder Kupfernitrit oder Halogensalze, wie Bromide, Chloride, Fluoride mit Metallen in Betracht. Die Wahl des Metalls bestimmt die Farbe, wie an sich bekannt. Zur Erzeugung des Laserstrahls können herkömmliche Laserquellen verwendet werden auch CO₂-Laser, die zum Gravieren von Glas nur bedingt geeignet sind. CO₂-Laser sind besonders wenig aufwändig in der Herstellung. Das erfindungsgemäße Verfahren ist insbesondere zum Markieren oder Beschriften von Glas, z.B. Automobilscheiben, geeignet und lässt keine unerwünschte, unsichtbare Entfernung und/oder eine Manipulation der Beschriftung zu.

## Patentansprüche

1. Verfahren zur Herstellung von farbigen Strukturen in einer Glasoberfläche, insbesondere zum Beschriften des Glases, mit den folgenden Verfahrensschritten:
- die Glasoberfläche eines undotierten Glases wird mit einer Lösung oder einem Gel eines zur Glasfärbung geeigneten Metallsalzes versehen, welche(s) den Laserstrahl gut transmittiert,
- ein Laserstrahl wird in einem zu färbenden Bereich auf die Lösung oder das Gel auf der Oberfläche gerichtet,
- der zu färbende Bereich wird durch das einfallende Laserlicht erwärmt,
**dadurch gekennzeichnet, daß**
- die Temperatur der Erwärmung in dem zu färbenden Bereich niedriger ist als eine zum Aufschmelzen der Oberfläche erforderliche Temperatur.

2. Verfahren nach Anspruch 1, **dadurch gekennzeichnet, daß** die Lösung oder das Gel die Glasfläche nur in einer dünnen Schicht oder einem Film bedeckt.

3. Verfahren nach Anspruch 2, **dadurch gekennzeichnet, daß** das Gel oder die Lösung auf das Glas aufgesprüht wird.

4. Verfahren nach Anspruch 2, **dadurch gekennzeichnet, daß** das Gel oder die Lösung auf das Glas aufgestrichen wird.

5. Verfahren nach Anspruch 1 oder 2, **dadurch gekennzeichnet, daß** das Glas in ein Lösungsbad getaucht wird.

6. Verfahren nach einem der Anspruche 1 bis 5, **dadurch gekennzeichnet, daß** nur ein lokaler Oberflächenbereich des Glases mit dem Gel oder der Lösung in Kontakt gebracht wird.

7. Verfahren nach Anspruch 1 oder 2, **dadurch gekennzeichnet, daß** die Lösung oder das Gel als Schicht auf eine Folie aufgebracht wird, die anschließend mit der Glasfläche in Kontakt gebracht wird.

8. Verfahren nach Anspruch 7, **dadurch gekennzeichnet, daß** die Folie für die Wellenlängen des Laserlichts transparent ist.

9. Verfahren zur Herstellung von farbigen Strukturen in einer Glasoberfläche, insbesondere zum Beschriften des Glases mit den folgenden Verfahrensschritten:
- ein Substrat, das eine Lösung eines zur Glasfärbung geeigneten Metallsalzes enthält, wird in unmittelbaren Kontakt mit einer Oberfläche eines undotierten Glases gebracht, wobei das Substrat den Laserstrahl gut transmittiert, und
- ein zu färbender Bereich wird durch einfallendes Laserlicht erwärmt
**dadurch gekennzeichnet, daß**
- ein Laserstrahl durch das Substrat auf die Oberfläche gerichtet wird und das Substrat für den Laserstrahl transparent ist und
- die Temperatur der Erwärmung in dem zu färbenden Bereich niedriger als eine zum Aufschmelzen der Oberfläche erforderliche Temperatur ist.

10. Verfahren nach Anspruch 9, **dadurch gekennzeichnet, daß** eine für die Wellenlängen des Laserlichts transparente Kunststofffolie als Substrat verwendet wird.

## Claims

1. Method for the production of colored structures in a glass surface, in particular for the inscription of the glass, with the following procedural steps:
- the glass surface of an undoped glass is provided with a solution or a gel of a metal salt suitable for glass coloring, which transmits the laser beam well,
- a laser beam is aimed at the solution or the gel on the surface in an area to be colored,
- the area to be colored is heated by the incident laser light,
**characterized in that**
- the temperature of the heating in the area to be colored is lower than a temperature required to melt the surface.

2. Method according to claim 1, **characterized in that** the solution or the gel only covers the glass surface in a thin layer or a film.

3. Method according to claim 2, **characterized in that** the gel or the solution is sprayed onto the glass.

4. Method according to claim 2, **characterized in that** the gel or the solution is painted onto the glass.

5. Method according to claim 1 or 2, **characterized in that** the glass is submerged in a solution bath.

6. Method according to one of claims 1 through 5, **characterized in that** only a local surface area of the glass is brought in contact with the gel or the solution.

7. Method according to claim 1 or 2, **characterized in that** the solution or the gel is applied to a film as a layer, which is then brought in contact with the glass surface.

8. Method according to claim 7, **characterized in that** the film is transparent for the wavelengths of the laser light.

9. Method for the production of colored structures in a glass surface, in particular for the inscription of the glass with the following procedural steps:
- a substrate, which contains a solution of a metal salt suitable for glass coloring, is brought in direct contact with a surface of an undoped glass, wherein the substrate transmits the laser beam well, and
- an area to be colored is heated by the incident laser light
**characterized in that**
- a laser beam is aimed through the surface at the substrate and the substrate is transparent for the laser beam and
- the temperature of the heating in the area to be colored is lower than a temperature required to melt the surface.

10. Method according to claim 9, **characterized in that** a plastic film that is transparent for the wavelengths of the laser beam is used as the substrate.

## Revendications

1. Procédé de production de structures colorées dans une surface de verre, en particulier pour réaliser des inscriptions sur le verre, avec les étapes de procédé suivantes :
- la surface de verre d'un verre non dopé est munie d'une solution ou d'un gel d'un sel métallique approprié pour colorer le verre et qui transmet bien la lumière laser,
- un rayon laser est dirigé, dans une zone à colorer, sur la solution ou sur le gel sur la surface,
- la zone à colorer est chauffée par la lumière laser incidente,
**caractérisé en ce que**
- la température de l'échauffement dans la zone à colorer est plus faible qu'une température nécessaire pour faire fondre la surface.

2. Procédé selon la revendication 1, **caractérisé en ce que** la solution ou le gel ne recouvre la surface de verre que d'une couche mince ou d'un film.

3. Procédé selon la revendication 2, **caractérisé en ce que** le gel ou la solution est pulvérisé(e) sur le verre.

4. Procédé selon la revendication 2, **caractérisé en ce que** le gel ou la solution est appliqué(e) sur le verre par enduction.

5. Procédé selon la revendication 1 ou 2, **caractérisé en ce que** le verre est immergé dans un bain de solution.

6. Procédé selon une des revendications 1 à 5, **caractérisé en ce que** seule une zone superficielle locale du verre est mise en contact avec le gel ou avec la solution.

7. Procédé selon la revendication 1 ou 2, **caractérisé en ce que** la solution ou le gel est appliqué(e) sous forme de couche sur une feuille qui est ensuite mise en contact avec la surface du verre.

8. Procédé selon la revendication 7, **caractérisé en ce que** la feuille est transparente aux longueurs d'ondes de la lumière laser.

9. Procédé de production de structures colorées dans une surface de verre, en particulier pour réaliser des inscriptions sur le verre, avec les étapes de procédé suivantes :
- un substrat qui contient une solution d'un sel métallique approprié pour colorer le verre est mis en contact direct avec une surface d'un verre non dopé, le substrat transmettant bien la lumière laser, et
- une zone à colorer est chauffée par la lumière laser incidente
**caractérisé en ce que**
- un rayon laser est dirigé à travers le substrat sur la surface, et le substrat est transparent à la lumière laser et
- la température de l'échauffement dans la zone à colorer est plus faible qu'une température nécessaire pour faire fondre la surface.

10. Procédé selon la revendication 9, **caractérisé en ce qu'**une feuille de matière plastique transparente aux longueurs d'ondes de la lumière laser est utilisée comme substrat.
